# FASCICULE DE BREVET EUROPEEN

(11) **EP 3 341 231 B1**
(45) Date de publication et mention de la délivrance du brevet: **02.09.2020**
(21) Numéro de dépôt: 16760766.2
(22) Date de dépôt: 28.07.2016
(51) Int. Cl.: B60J 10/23, B60J 10/24, B60J 10/40, B60J 10/84, B60J 10/86

(54) **PORTE DE VÉHICULE AUTOMOBILE COMPRENANT DEUX JOINTS RELIÉS ENTRE EUX**
KRAFTFAHRZEUGTÜR MIT ZWEI MITEINANDER VERBUNDENEN DICHTUNGEN
MOTOR VEHICLE DOOR COMPRISING TWO MUTUALLY CONNECTED SEALS

(30) Priorité: 26.08.2015 FR 1557946
(43) Date de publication de la demande: 04.07.2018
(73) Titulaire: Renault s.a.s., 92100 Boulogne-Billancourt (FR)
(72) Inventeur: LEFEBVRE, Benjamin, 91470 Les Molieres (FR); LOZACHMEUR, Stephanie, 78000 Versailles (FR)
(86) Numéro de dépôt international: PCT/FR2016/051966
(87) Numéro de publication internationale: WO 2017/032936

(56) Documents cités:
- EP-A2- 2 703 202
- DE-A1- 19 730 942
- DE-A1-102008 027 619

## Description

### Domaine technique de l'invention

L'invention concerne le domaine de l'automobile, et plus particulièrement de l'étanchéité des portes du véhicule automobile.

L'invention a pour objet plus particulièrement une porte de véhicule automobile équipée de joints.

### État de la technique

Dans le domaine de l'automobile, il est connu d'utiliser des joints d'étanchéité au niveau des portes latérales pour assurer l'étanchéité à l'eau, la protection aux salissures, et/ou encore l'insonorisation de l'habitacle.

Il est notamment connu d'équiper une porte latérale de véhicule automobile avec un joint d'étanchéité tubulaire formant une boucle non fermée s'étendant sur quasiment tout le pourtour de la porte. Un tel joint n'est pas optimal car il nécessite d'agrandir le cadre de porte, ce qui provoque une diminution de la visibilité avant pour le conducteur à l'interface entre la porte et le montant de baie du pare-brise. C'est en substance ce que décrit le document US2010/0164248.

Le document EP 2 703 202 décrit un boucle d'étanchéité pour une porte de véhicule.

En outre, certains véhicules présentent aujourd'hui des marqueurs forts en termes d'esthétique. Ces marqueurs peuvent se présenter sous la forme de baguettes plastiques en bas de porte, appelés PIP pour Protecteur Inférieur de Porte. Ces PIP sont souvent par choix proéminents sur les portes, rendant leurs cinématiques de débattements assez intrusives et provoquant certaines problématiques de salissure des encadrants de porte de la caisse des véhicules automobiles. L'utilisation, de PIP peut provoquer des interruptions d'étanchéité laissant ainsi passer des saletés et des poussières venant souiller la zone de bavolet. En outre, cela peut aussi provoquer des problématiques quant à l'insonorisation des véhicules automobiles.

En ce sens, il existe un besoin d'améliorer les solutions actuelles d'étanchéité pour porte de véhicule automobile.

### Objet de l'invention

Le but de la présente invention est de proposer une solution qui tend à remédier à tout ou partie des inconvénients listés ci-dessus.

On tend vers ce but en ce que la porte de véhicule automobile comprend un premier joint d'étanchéité et un deuxième joint d'étanchéité différent du premier joint, la porte comportant une première interface de liaison entre les premier et deuxième joints configurée de telle sorte à assurer une continuité de l'étanchéité au niveau de ladite première interface de liaison lorsque la porte est dans une configuration de fermeture par rapport à une caisse de véhicule automobile, et en ce qu'elle comporte une boucle d'étanchéité fermée configurée de sorte à venir en contact avec un pourtour d'une ouverture de la caisse du véhicule automobile en vue d'assurer l'étanchéité dans la configuration de fermeture, ladite boucle d'étanchéité comportant au moins les premier et deuxième joints d'étanchéité et la première interface de liaison.

Préférentiellement, la porte comporte une deuxième interface de liaison entre les premier et deuxième joints configurée de telle sorte à assurer une continuité de l'étanchéité au niveau de ladite deuxième interface de liaison lorsque la porte est dans la configuration de fermeture par rapport à la caisse de véhicule automobile.

Selon une réalisation, les premier et deuxième joints comportant chacun deux extrémités longitudinales opposées, la première interface de liaison est située au niveau de l'une des extrémités longitudinales du premier joint et de l'une des extrémités longitudinales du deuxième joint, et la deuxième interface de liaison est située au niveau de l'autre des extrémités longitudinales du premier joint et de l'autre des extrémités longitudinales du deuxième joint.

La porte peut comporter un bas de porte et une armature s'étendant du bas de porte pour délimiter avec ledit bas de porte une ouverture destinée à recevoir une vitre de la porte.

Selon une réalisation, le premier joint est un joint tubulaire, notamment en forme de U, et le deuxième joint comporte au moins un guide coulisse destiné à recevoir une extrémité de vitre de la porte.

Le deuxième joint peut être monté sur au moins une partie de l'armature, et le premier joint peut être monté au moins en partie sur le bas de porte.

Selon une mise en œuvre, la première interface de liaison forme une partie du premier joint, notamment la première interface de liaison vient communément de moulage avec le reste du premier joint.

Notamment la première interface de liaison peut comporter une zone épousant une surface extérieure du deuxième joint.

Selon une réalisation, la deuxième interface de liaison forme une partie du deuxième joint, notamment la deuxième interface de liaison vient communément de moulage avec le reste du deuxième joint. Notamment, la deuxième interface de liaison peut comporter une zone configurée de sorte à épouser une surface extérieure du premier joint. En outre, le bas de porte peut comporter un joint d'antisalissure monté dans une partie inférieure du bas de porte.

Avantageusement, la première interface de liaison comporte un premier élément d'assemblage coopérant avec un deuxième élément d'assemblage appartenant à un caisson de la porte pour solidariser ladite première interface de liaison audit caisson de porte.

L'invention est aussi relative à un véhicule automobile comprenant une caisse et une porte telle que décrite, ladite porte étant articulée sur ladite caisse de telle sorte à varier entre une configuration d'ouverture et une configuration de fermeture. Le véhicule comporte alors une première boucle d'étanchéité, formée au moins par les premier et deuxième joints d'étanchéité et la première interface de liaison, entre un caisson de ladite porte et ladite caisse dans la configuration de fermeture de la porte. Selon une réalisation, le véhicule comporte un troisième joint d'étanchéité monté sur la caisse et venant coopérer avec la porte dans sa configuration de fermeture pour former une deuxième boucle d'étanchéité, notamment la première boucle d'étanchéité entoure la deuxième boucle d'étanchéité.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue latérale depuis l'intérieur du véhicule automobile d'une porte avant et d'une porte arrière du véhicule,
- la figure 2 est une vue représentant une coupe selon C1 de la figure 1,
- la figure 3 est une vue représentant une coupe selon C2 de la figure 1,
- les figures 4 et 5 illustrent deux vues en perspectives différentes de la partie avant de la porte latérale avant du véhicule automobile au niveau d'une jonction entre deux joints,
- la figure 6 illustre une vue en perspective d'une partie avant de la porte latérale arrière au niveau d'une jonction entre deux joints,
- les figures 7 et 8 illustrent deux vues en perspectives différentes de la partie arrière supérieure de la porte latérale avant du véhicule automobile au niveau d'une jonction entre deux joints,
- la figure 9 illustre une vue en perspective d'une partie arrière de la porte latérale arrière au niveau d'une jonction entre deux joints.

### Description de modes préférentiels de l'invention

La présente invention propose une nouvelle manière de réaliser une étanchéité sur une porte à partir de deux joints de type différents par l'utilisation d'une interface de liaison adaptée entre les deux joints.

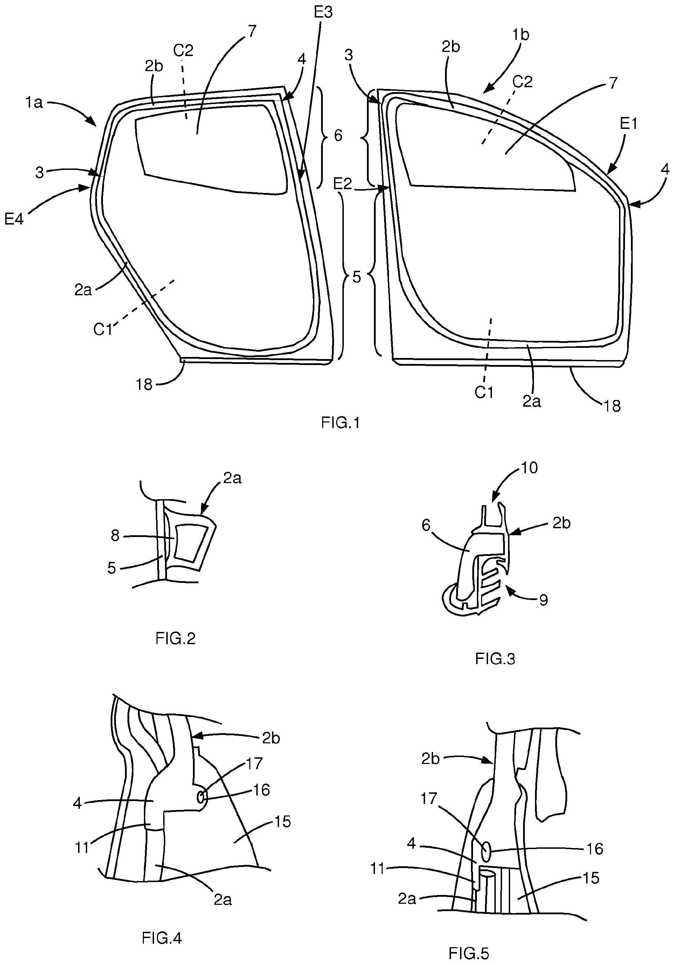

La figure 1 illustre deux portes 1a, 1b de véhicule automobile. Il s'agit notamment de portes latérales du véhicule automobile, en particulier une porte arrière 1a et une porte avant 1b. Chacune de ces portes de véhicule automobile comprend un premier joint d'étanchéité 2a, et un deuxième joint d'étanchéité 2b différent du premier joint 2a.

Par « joints différents », on entend qu'il s'agit de joints de type différent, c'est-à-dire ayant des formes différentes, notamment dictées par leurs fonctions et/ou leur emplacement sur la porte.

Dans la suite de la description, à moins que le contraire ne soit précisé, la référence à une porte peut faire référence à la porte avant et/ou à la porte arrière.

Dans la présente description, la notion d'étanchéité est large dans le sens où elle peut couvrir l'étanchéité à un liquide, à des poussières et/ou au bruit.

La porte comporte une première interface de liaison 3 entre les premier et deuxième joints d'étanchéité 2a, 2b configurée de telle sorte à assurer une continuité de l'étanchéité au niveau de ladite première interface de liaison 3 lorsque la porte est dans une configuration de fermeture par rapport à une caisse de véhicule automobile. Cette continuité est avantageuse dans le sens où elle permet de garantir l'étanchéité au niveau de l'intersection de deux joints.

La porte 1a, 1b comporte une boucle d'étanchéité fermée configurée de sorte à venir en contact avec un pourtour d'une ouverture de la caisse du véhicule automobile en vue d'assurer l'étanchéité dans la configuration de fermeture. Cette boucle d'étanchéité comporte au moins les premier et deuxième joints d'étanchéité 2a, 2b ainsi que la première interface de liaison 3, laquelle s'étend entre un côté intérieur de porte portant le premier joint d'étanchéité 2a et un côté extérieur de porte portant le deuxième joint d'étanchéité 2b. L'ouverture de la caisse est généralement dimensionnée pour autoriser l'accès à un habitacle du véhicule automobile lorsque la porte est dans une configuration d'ouverture.

En outre, la porte 1a, 1b peut comporter une deuxième interface de liaison 4 entre les premier et deuxième joints d'étanchéité 2a, 2b configurée de telle sorte à assurer une continuité de l'étanchéité au niveau de ladite deuxième interface 4, notamment entre un côté intérieur de porte portant le premier joint d'étanchéité 2a et un côté extérieur de porte portant le deuxième joint d'étanchéité 2b, lorsque la porte est dans la configuration de fermeture par rapport à la caisse de véhicule automobile. Dans ce cas, la deuxième interface 4 peut appartenir à la boucle d'étanchéité décrite ci-dessus.

De manière préférée, les premier et deuxième joints d'étanchéité 2a, 2b comportent chacun deux extrémités longitudinales opposées, la première interface de liaison 3 est située au niveau de l'une des extrémités longitudinales du premier joint 2a et de l'une des extrémités longitudinales du deuxième joint 2b, et la deuxième interface de liaison 4 est située au niveau de l'autre des extrémités longitudinales du premier joint 2a et de l'autre des extrémités longitudinales du deuxième joint 2b. En ce sens, les premier et deuxième joints 2a, 2b et les première et deuxième interfaces de liaison 3, 4 sont agencés de sorte à former la boucle d'étanchéité de la porte correspondante.

De manière générale, la porte 1a, 1b comporte un bas de porte 5 et une armature 6 s'étendant du bas de porte 5 pour délimiter avec ledit bas de porte 5 une ouverture 7 destinée à recevoir une vitre de la porte 1a, 1b.

Le bas de porte 5 et l'armature 6 forment ce que l'on appelle un caisson de porte sur lequel sont montés les premier et deuxième joints d'étanchéité 2a, 2b.

Selon une réalisation, le premier joint d'étanchéité 2a est un joint tubulaire, notamment en forme de U, et le deuxième joint 2b comporte au moins un guide coulisse destiné à recevoir une extrémité de vitre de la porte. On comprend alors que le deuxième joint 2b est monté sur au moins une partie de l'armature 6, et que le premier joint 2a est monté au moins en partie sur le bas de porte 5.

Le premier joint 2a est tubulaire de telle sorte qu'il vient s'écraser contre la caisse lors de la fermeture de la porte. Par forme de U, on entend que ce joint tubulaire délimite selon sa longueur une cavité de forme générale en U. On notera néanmoins que le premier joint 2a comporte une base montée contre le caisson de porte et que les extrémités du U sont reliées à cette base notamment comme l'illustre la figure 2 où la base 8 du premier joint 2a est montée sur le bas de porte 5. Cette forme tubulaire est autorisée dans des zones de la porte dont on ne cherche pas à limiter les dimensions.

Le deuxième joint 2b dont une coupe est illustrée en figure 3 est monté à l'armature 6. Il vient notamment épouser une partie appelée cadre de vitre de l'armature 6. Il comprend le guide coulisse 9 destiné à venir réaliser l'étanchéité entre la vitre (non représentée) et l'armature 6 lorsque la vitre est en position remontée. Le deuxième joint 2b comporte en outre une partie d'étanchéification supérieure 10 venant coopérer avec la caisse du véhicule lorsque la porte est dans sa configuration de fermeture.

Dans le cas de la porte avant 1b du véhicule automobile, l'armature présente une première extrémité E1 proximale de l'avant du véhicule automobile et reliée au bas de porte 5, et une deuxième extrémité E2 distale de l'avant du véhicule automobile et reliée au bas de porte. La liaison entre les premier et deuxième joints 2a, 2b se fait alors d'une part au niveau de l'interface entre la première extrémité E1 et le bas de porte 5 et d'autre part au niveau d'une partie haute arrière de l'armature 6 au dessus de la deuxième extrémité E2. En ce sens, on peut considérer que le premier joint 2a est monté à l'armature 6 et au bas de porte 5, alors que le deuxième joint 2b n'est assemblé qu'à l'armature 6. Cet agencement particulier est notamment dicté par des raisons ergonomiques. En effet, il est souhaitable de maximiser la visibilité du conducteur à l'avant de la porte avant, le premier joint étant plus imposant que le deuxième joint, il s'étend alors seulement jusqu'à la première extrémité E1 de la porte avant.

Dans le cas de la porte arrière 1a du véhicule automobile, l'armature 6 présente une première extrémité E3 proximale de l'avant du véhicule automobile et reliée au bas de porte 5, et une deuxième extrémité E4 distale de l'avant du véhicule automobile et reliée au bas de porte 5. La liaison entre les premier et deuxième joints 2a, 2b se fait alors d'une part au niveau de l'interface entre la deuxième extrémité E4 et le bas de porte 5 et d'autre part au niveau d'une partie haute avant de l'armature 6 au dessus de la première extrémité E3. En ce sens, on peut considérer que le premier joint 2a est monté à l'armature 6 et au bas de porte 5, alors que le deuxième joint 2b n'est assemblé qu'à l'armature 6. Alternativement, la liaison entre les premier et deuxième joints 2a, 2b se fait d'une part au niveau de l'interface entre la deuxième extrémité E4 et le bas de porte 5 et d'autre part au niveau de la première extrémité E3.

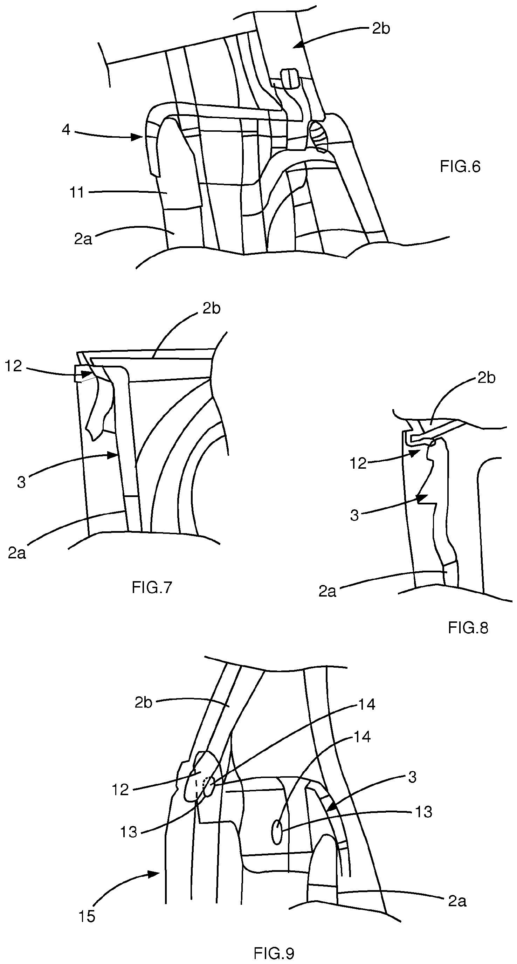

Avantageusement, la deuxième interface de liaison 4 forme une partie du deuxième joint 2b, notamment la deuxième interface de liaison 4 vient communément de moulage avec le reste du deuxième joint 2b. Ceci permet de limiter le nombre de pièces distinctes à assembler lors de la fabrication de la porte. Autrement dit, la deuxième interface de liaison 4 appartient au deuxième joint d'étanchéité 2b. En fait, la deuxième interface de liaison 4 peut comporter une zone épousant une surface extérieure du premier joint 2a. C'est en substance ce qui est visible aux figures 4, 5 et 6 où le deuxième joint 2b comporte la deuxième interface de liaison 4 munie de la zone 11 épousant la surface extérieure du premier joint d'étanchéité 2a. Les figures 4 et 5 sont liées à la porte avant et la figure 6 est liée à la porte arrière, on comprend que l'interface de liaison correspondante 4 est adaptée à la typologie de la porte au niveau de l'intersection des premier et deuxième joints.

Selon une réalisation, la zone 11 épousant la surface extérieure du premier joint 2a est appelée chaussette puisqu'elle vient se manchonner à l'extrémité longitudinale du premier joint 2a. Autrement dit, la deuxième interface de liaison 4 peut comprendre au moins une rainure dans laquelle est emmanchée une extrémité libre du joint tubulaire.

De manière similaire, comme illustré en figures 7 à 9, la première interface de liaison 3 forme une partie du premier joint 2a, notamment la première interface de liaison 3 vient communément de moulage avec le reste du premier joint 2a. Autrement dit, la première interface de liaison 3 appartient au premier joint d'étanchéité 2a. Selon une réalisation, la première interface de liaison 3 peut comporter une zone 12 épousant une surface extérieure du deuxième joint 2b (figures 7 et 8) ou une zone 12 dont la forme est épousée par le deuxième joint 2b (figure 9)

La forme du deuxième joint 2b à son extrémité longitudinale n'étant généralement pas tubulaire, la zone 12 correspondante de la première interface de liaison 3 est moulée à cette forme particulière, il ne s'agit alors pas d'une simple chaussette comme dans le cas de la deuxième interface de liaison 4.

Dans l'expectative de faciliter l'assemblage des premier et deuxième joints d'étanchéité 2a, 2b, la première interface de liaison 3 peut comporter un premier élément d'assemblage 13 coopérant avec un deuxième élément d'assemblage 14 appartenant à un caisson 15 de la porte (figure 9) pour solidariser ladite première interface de liaison 3 audit caisson de porte 15. Les premier et deuxième éléments d'assemblage 13 et 14 peuvent former un système de maintien mutuel par emboîtement autorisant ainsi le maintien adéquat de la première interface de liaison 3 et automatiquement du deuxième joint 2b lorsque la première interface de liaison 3 vient épouser une surface correspondante du deuxième joint 2b.

Dans l'exemple particulier de la figure 9, la première interface de liaison 3 comporte deux ouvertures 13 formant deux premiers éléments d'assemblage et le caisson 15 comporte deux ergots 14 formant deux deuxièmes éléments d'assemblages pénétrant respectivement dans les deux premiers éléments d'assemblage pour assurer un verrouillage positif de la première interface de liaison contre le caisson de porte 15. L'avantage d'un tel système est qu'il est rapide à mettre en place.

Le principe de l'assemblage de la première interface de liaison 3 au caisson de porte 15 s'applique aussi à la deuxième interface de liaison 4 où l'on retrouve (figures 4 et 5) un premier élément d'assemblage 16 appartenant à la deuxième interface de liaison 4 et un deuxième élément d'assemblage 17 appartenant au caisson de porte 15. Ici aussi le premier élément d'assemblage 16 peut se présenter sous la forme d'une ouverture et le deuxième élément d'assemblage 17 peut se présenter sous la forme d'un ergot pénétrant dans l'ouverture du premier élément d'assemblage 16 pour assurer un verrouillage positif de la deuxième interface de liaison 4 contre le caisson de porte 15.

Selon un perfectionnement, visible notamment en figure 1, le bas de porte 5 comporte un joint d'antisalissure 18 monté dans une partie inférieure du bas de porte 5. Le but de ce joint est de limiter l'introduction de saleté entre le bas de porte 5 et la caisse du véhicule automobile. Généralement, ce joint antisalissure est monté sur le bas de porte 5 en dessous du premier joint 2a.

On comprend de ce qui a été dit précédemment, que l'invention est aussi relative à un véhicule automobile comprenant une caisse et une porte telle que décrite précédemment, ladite porte étant articulée sur ladite caisse de telle sorte à varier entre une configuration d'ouverture et une configuration de fermeture. Dans la configuration d'ouverture, la porte autorise le passage d'un usager de l'intérieur de l'habitacle vers l'extérieur au travers d'une ouverture formée dans la caisse, et inversement, alors qu'en configuration de fermeture la porte obture ladite ouverture correspondante de la caisse.

Avantageusement, le véhicule automobile comporte une première boucle d'étanchéité, formée au moins par les premier et deuxième joints d'étanchéité 2a, 2b et la première interface de liaison 3, entre un caisson 15 de ladite porte et ladite caisse dans la configuration de fermeture de la porte. En outre, un troisième joint d'étanchéité peut être monté sur la caisse pour venir coopérer avec la porte dans sa configuration de fermeture afin de former une deuxième boucle d'étanchéité, notamment la première boucle d'étanchéité entoure la deuxième boucle d'étanchéité. L'utilisation de deux boucles d'étanchéité permet notamment de former une chambre étanche entre les première et deuxième boucles dans la configuration de fermeture de la porte, par exemple pour d'améliorer l'insonorisation de l'habitable du véhicule automobile. De préférence, le troisième joint est un joint tubulaire, notamment entourant l'ouverture de la caisse du véhicule automobile destinée à être obturée par ladite porte dans sa configuration de fermeture. Les première et deuxième boucles d'étanchéité sont dites fermées car elles permettent d'assurer une boucle d'étanchéité continue lorsque la porte est dans sa configuration de fermeture.

Le troisième joint joue le rôle d'étanchéité principale du fait de l'utilisation d'un joint tubulaire en forme de boucle. Cette boucle (ou barrière) d'étanchéité est généralement chaussée sur la feuillure d'entrée de porte au niveau de la caisse du véhicule automobile.

Les premier et deuxième joints d'étanchéité peuvent jouer le rôle d'étanchéité secondaire. Cette boucle entourant le troisième joint, forme alors une boucle d'étanchéité contre la salissure. En ce sens, les premier et deuxième joints permettent d'éviter la salissure du pourtour de réception de porte sur la caisse du véhicule automobile.

Il résulte de ce qui a été dit précédemment, qu'on présente aussi un joint d'étanchéité pour porte de véhicule automobile comportant une première partie de joint, notamment formée par un joint tubulaire ou un guide coulisse. Ledit joint d'étanchéité comporte aussi une deuxième partie de joint délimitant une interface de liaison 3, 4 comprenant une zone 11, 12 conformée pour épouser une surface extérieure d'un autre joint, et une zone munie d'au moins un élément d'assemblage 13, 17 destiné à la fixation dudit joint d'étanchéité à un caisson 15 de la porte de véhicule automobile.

Pour assurer une bonne étanchéité au niveau des interfaces entre les joints, les premier et deuxième éléments de liaison 3, 4 peuvent comporter un système venant se clipper à un autre joint, autrement dit, les zones 11 et 12 évoquée précédemment peuvent être telles que lorsqu'elles épousent le joint correspondant, elles le fixent aussi à l'élément de liaison concerné.

De manière plus précise, la porte de véhicule automobile peut comporter un caisson 15 sur lequel est monté un joint comprenant un guide coulisse 9 muni d'un moyen de guidage d'une vitre sur un encadrement 6 de vitre et un moyen d'étanchéité 10 de la partie supérieure de l'encadrement de vitre destiné à venir en appui contre un côté de caisse du véhicule lorsque la porte est dans une position de fermeture d'une ouverture d'accès à l'habitacle. Le caisson peut présenter des parois transversales, venues de manière par emboutissage, sur lesquelles est fixé, de préférence par clippage, un joint tubulaire 2a. Ce joint tubulaire 2a est préférentiellement relié par chacune de ces extrémités au guide coulisse 2b par un moyen de liaison 3, 4 de sorte que l'arrangement du joint tubulaire 2a avec le guide coulisse 2b définisse une ligne d'étanchéité continue.

Par ailleurs, de manière plus particulière, le véhicule automobile peut comporter un côté de caisse dans lequel est ménagée au moins une ouverture délimitée par une embrasure de porte sur laquelle est monté un joint principal d'étanchéité continue et destiné à venir en appui contre la porte susmentionnée, le long d'une paroi longitudinale formée dans le caisson de porte par emboutissage, de telle sorte que le joint tubulaire et le guide coulisse montés sur la porte et le joint principal d'étanchéité monté sur le côté de caisse délimitent une chambre d'étanchéité périphérique à ladite ouverture de porte.

## Revendications

1. Porte de véhicule automobile comprenant un premier joint d'étanchéité (2a) et un deuxième joint d'étanchéité (2b) différent du premier joint (2a), la porte comportant une première interface de liaison (3) entre les premier et deuxième joints (2a, 2b) configurée de telle sorte à assurer une continuité de l'étanchéité au niveau de ladite première interface de liaison (3) lorsque la porte est dans une configuration de fermeture par rapport à une caisse de véhicule automobile, la porte comportant une boucle d'étanchéité fermée configurée de sorte à venir en contact avec un pourtour d'une ouverture de la caisse du véhicule automobile en vue d'assurer l'étanchéité dans la configuration de fermeture, ladite boucle d'étanchéité comportant au moins les premier et deuxième joints d'étanchéité (2a, 2b) et la première interface de liaison (3), le premier joint (2a) étant un joint tubulaire, la porte étant **caractérisée en ce que** le deuxième joint (2b) comporte au moins un guide coulisse (9) destiné à recevoir une extrémité de vitre de la porte, la première interface de liaison (3) s'étendant entre un côté intérieur de porte portant le premier joint d'étanchéité (2a) et un côté extérieur de porte portant le deuxième joint d'étanchéité (2b).

2. Porte selon la revendication 1, **caractérisée en ce qu'**elle comporte une deuxième interface de liaison (4) entre les premier et deuxième joints (2a, 2b) configurée de telle sorte à assurer une continuité de l'étanchéité au niveau de ladite deuxième interface de liaison (4) lorsque la porte est dans la configuration de fermeture par rapport à la caisse de véhicule automobile.

3. Porte selon la revendication précédente, **caractérisée en ce que** les premier et deuxième joints (2a, 2b) comportant chacun deux extrémités longitudinales opposées, la première interface de liaison (3) est située au niveau de l'une des extrémités longitudinales du premier joint (2a) et de l'une des extrémités longitudinales du deuxième joint (2b), et la deuxième interface de liaison (4) est située au niveau de l'autre des extrémités longitudinales du premier joint (2a) et de l'autre des extrémités longitudinales du deuxième joint (2b).

4. Porte selon l'une quelconque des revendications précédentes, **caractérisée en ce qu'**elle comporte un bas de porte (5) et une armature (6) s'étendant du bas de porte (5) pour délimiter avec ledit bas de porte (6) une ouverture (7) destinée à recevoir une vitre de la porte.

5. Porte selon la revendication 4, **caractérisée en ce que** le deuxième joint (2b) est monté sur au moins une partie de l'armature, et **en ce que** le premier joint (2a) est monté au moins en partie sur le bas de porte (5).

6. Porte selon l'une quelconque des revendications précédentes, **caractérisée en ce que** la première interface de liaison (3) forme une partie du premier joint (2a), notamment la première interface de liaison (3) vient communément de moulage avec le reste du premier joint (2a).

7. Porte selon l'une des revendications précédentes, **caractérisée en ce que** la première interface de liaison (3) comporte une zone (12) épousant une surface extérieure du deuxième joint (2b).

8. Porte selon la revendication 2 et l'une quelconque des revendications précédentes, **caractérisée en ce que** la deuxième interface de liaison (4) forme une partie du deuxième joint (2b), notamment la deuxième interface de liaison (4) vient communément de moulage avec le reste du deuxième joint (2b).

9. Porte selon la revendication précédente, **caractérisée en ce que** la deuxième interface de liaison (4) comporte une zone (11) configurée de sorte à épouser une surface extérieure du premier joint (2a).

10. Porte selon la revendication 4 et l'une quelconque des revendications précédentes, **caractérisée en ce que** le bas de porte (5) comporte un joint d'antisalissure (18) monté dans une partie inférieure du bas de porte.

11. Porte selon l'une quelconque des revendications précédentes, **caractérisée en ce que** la première interface de liaison (3) comporte un premier élément d'assemblage (13) coopérant avec un deuxième élément d'assemblage (14) appartenant à un caisson (15) de la porte pour solidariser ladite première interface de liaison (3) audit caisson de porte (15).

12. Véhicule automobile comprenant une caisse et une porte selon l'une quelconque des revendications précédentes, ladite porte étant articulée sur ladite caisse de telle sorte à varier entre une configuration d'ouverture et une configuration de fermeture, **caractérisé en ce qu'**il comporte une première boucle d'étanchéité, formée au moins par les premier et deuxième joints d'étanchéité (2a, 2b) et la première interface de liaison, entre un caisson (15) de ladite porte et ladite caisse dans la configuration de fermeture de la porte.

13. Véhicule selon la revendication précédente, **caractérisé en ce qu'**il comporte un troisième joint d'étanchéité monté sur la caisse et venant coopérer avec la porte dans sa configuration de fermeture pour former une deuxième boucle d'étanchéité, notamment la première boucle d'étanchéité entoure la deuxième boucle d'étanchéité.

## Patentansprüche

1. Kraftfahrzeugtür, umfassend eine erste Dichtung (2a) und eine zweite Dichtung (2b), die sich von der ersten Dichtung (2a) unterscheidet, wobei die Tür zwischen der ersten und der zweiten Dichtung (2a, 2b) eine erste Verbindungsschnittstelle (3) aufweist, die so konfiguriert ist, dass sie die Kontinuität der Abdichtung im Bereich der ersten Verbindungsschnittstelle (3) gewährleistet, wenn sich die Tür in einer geschlossenen Konfiguration in Bezug auf eine Kraftfahrzeugkarosserie befindet, wobei die Tür eine geschlossene Dichtungsschleife aufweist, die so konfiguriert ist, dass sie mit einem Umfang einer Öffnung der Kraftfahrzeugkarosserie in Kontakt kommt, um in der geschlossenen Konfiguration die Abdichtung zu gewährleisten, wobei die Dichtungsschleife zumindest die erste und die zweite Dichtung (2a, 2b) und die erste Verbindungsschnittstelle (3) umfasst, wobei die erste Dichtung (2a) eine rohrförmige Dichtung ist, wobei die Tür **dadurch gekennzeichnet ist, dass** die zweite Dichtung (2b) zumindest eine Gleitführung (9) umfasst, die dazu vorgesehen ist, ein Ende einer Glasscheibe der Tür aufzunehmen, wobei sich die erste Verbindungsschnittstelle (3) zwischen einer Türinnenseite, die die erste Dichtung (2a) trägt, und einer Türaußenseite, die die zweite Dichtung (2b) trägt, erstreckt.

2. Tür nach Anspruch 1, **dadurch gekennzeichnet, dass** sie eine zweite Verbindungsschnittstelle (4) zwischen der ersten und der zweiten Dichtung (2a, 2b) umfasst, die so konfiguriert ist, dass sie eine Kontinuität der Abdichtung im Bereich der zweiten Verbindungsschnittstelle (4) gewährleistet, wenn sich die Tür in der geschlossenen Konfiguration in Bezug auf die Kraftfahrzeugkarosserie befindet.

3. Tür nach dem vorangehenden Anspruch, **dadurch gekennzeichnet, dass** die erste und die zweite Dichtung (2a, 2b) jeweils zwei gegenüberliegende Längsenden umfassen, wobei die erste Verbindungsschnittstelle (3) sich im Bereich eines der Längsenden der ersten Dichtung (2a) und eines der Längsenden der zweiten Dichtung (2b) befindet und die zweite Verbindungsschnittstelle (4) sich im Bereich des anderen der Längsenden der ersten Dichtung (2a) und des anderen der Längsenden der zweiten Dichtung (2b) befindet.

4. Tür nach einem der vorangehenden Ansprüche, **dadurch gekennzeichnet, dass** sie einen Türunterteil (5) und ein Gestell (6) umfasst, das sich vom Türunterteil (5) erstreckt, um mit dem Türunterteil (6) eine Öffnung (7) zu begrenzen, die dazu vorgesehen ist, eine Glasscheibe der Tür aufzunehmen.

5. Tür nach Anspruch 4, **dadurch gekennzeichnet, dass** die zweite Dichtung (2b) zumindest an einem Teil des Gestells montiert ist und dass die erste Dichtung (2a) zumindest teilweise am Türunterteil (5) montiert ist.

6. Tür nach einem der vorangehenden Ansprüche, **dadurch gekennzeichnet, dass** die erste Verbindungsschnittstelle (3) einen Teil der ersten Dichtung (2a) ausbildet, wobei insbesondere die erste Verbindungsschnittstelle (3) gemeinsam mit dem Rest der ersten Dichtung (2a) geformt ist.

7. Tür nach einem der vorangehenden Ansprüche, **dadurch gekennzeichnet, dass** die erste Verbindungsschnittstelle (3) einen Bereich (12) umfasst, der sich an eine Außenfläche der zweiten Dichtung (2b) anpasst.

8. Tür nach Anspruch 2 und einem der vorangehenden Ansprüche, **dadurch gekennzeichnet, dass** die zweite Verbindungsschnittstelle (4) einen Teil der zweiten Dichtung (2b) ausbildet, wobei insbesondere die zweite Verbindungsschnittstelle (4) gemeinsam mit dem Rest der zweiten Dichtung (2b) geformt ist.

9. Tür nach dem vorangehenden Anspruch, **dadurch gekennzeichnet, dass** die zweite Verbindungsschnittstelle (4) einen Bereich (11) umfasst, der so konfiguriert ist, dass er sich an eine Außenfläche der ersten Dichtung (2a) anpasst.

10. Tür nach Anspruch 4 und einem der vorangehenden Ansprüche, **dadurch gekennzeichnet, dass** der Türunterteil (5) eine schmutzabweisende Dichtung (18) umfasst, die in einem unteren Teil des Türunterteils montiert ist.

11. Tür nach einem der vorangehenden Ansprüche, **dadurch gekennzeichnet, dass** die erste Verbindungsschnittstelle (3) ein erstes Montageelement (13) umfasst, das mit einem zweiten Montageelement (14) zusammenwirkt, das zu einem Türrahmen (15) gehört, um die erste Verbindungsschnittstelle (3) mit dem Türrahmen (15) zu verbinden.

12. Kraftfahrzeug, umfassend eine Karosserie und eine Tür nach einem der vorangehenden Ansprüche, wobei die Tür an der Karosserie derart angelenkt ist, dass sie zwischen einer offenen Konfiguration und einer geschlossenen Konfiguration variiert, **dadurch gekennzeichnet, dass** es eine erste Dichtungsschleife umfasst, die in der geschlossenen Konfiguration der Tür zumindest durch die erste und die zweite Dichtung (2a, 2b) und die erste Verbindungsschnittstelle zwischen einem Rahmen (15) der Tür und der Karosserie ausgebildet ist.

13. Fahrzeug nach dem vorangehenden Anspruch, **dadurch gekennzeichnet, dass** es eine dritte Dichtung umfasst, die an einer Karosserie montiert ist und mit der Tür in ihrer geschlossenen Konfiguration zusammenwirkt, um eine zweite Dichtungsschleife auszubilden, wobei insbesondere die erste Dichtungsschleife die zweite Dichtungsschleife umgibt.

## Claims

1. Motor vehicle door comprising a first seal (2a) and a second seal (2b) different from the first seal (2a), the door comprising a first connection interface (3) at the interface between the first and second seals (2a, 2b), configured in such a way as to ensure continuity of sealing at said first connection interface (3) when the door is in a configuration of being closed with respect to a motor vehicle bodyshell, the door comprising a closed sealing loop configured in such a way as to come into contact with a periphery of an opening of the bodyshell of the motor vehicle so as to provide sealing in the closed configuration, said sealing loop comprising at least the first and second seals (2a, 2b) and the first connection interface (3), the first seal (2a) being a tubular seal, the door being **characterized in that** the second seal (2b) comprises at least one window channel guide (9) intended to accept one end of a window glass of the door, the first connection interface (3) extending between an inner side of door bearing the first seal (2a) and an outer side of door bearing the second seal (2b).

2. Door according to Claim 1, **characterized in that** it comprises a second connection interface (4) at the interface between the first and second seals (2a, 2b), configured in such a way as to ensure continuity of sealing at said second connection interface (4) when the door is in the configuration of being closed with respect to the motor vehicle bodyshell.

3. Door according to the preceding claim, **characterized in that** the first and second seals (2a, 2b) each have two opposite longitudinal ends, the first connection interface (3) is situated at one of the longitudinal ends of the first seal (2a) and one of the longitudinal ends of the second seal (2b), and the second connection interface (4) is situated at the other of the longitudinal ends of the first seal (2a) and the other of the longitudinal ends of the second seal (2b).

4. Door according to any one of the preceding claims, **characterized in that** it comprises a door lower part (5) and a framework (6) extending from the door lower part (5) to delimit, with said door lower part (6), an opening (7) intended to accommodate a window glass of the door.

5. Door according to Claim 4, **characterized in that** the second seal (2b) is mounted on at least part of the framework, and **in that** the first seal (2a) is mounted at least in part on the door lower part (5).

6. Door according to any one of the preceding claims, **characterized in that** the first connection interface (3) forms part of the first seal (2a), notably the first connection interface (3) is molded as one with the rest of the first seal (2a).

7. Door according to one of the preceding claims, **characterized in that** the first connection interface (3) comprises a zone (12) that conforms to an exterior surface of the second seal (2b).

8. Door according to Claim 2 and any one of the preceding claims, **characterized in that** the second connection interface (4) forms part of the second seal (2b), notably the second connection interface (4) is molded as one with the rest of the second seal (2b).

9. Door according to the preceding claim, **characterized in that** the second connection interface (4) comprises a zone (11) configured to conform to an exterior surface of the first seal (2a).

10. Door according to Claim 4 and any one of the preceding claims, **characterized in that** the door lower part (5) comprises a weather strip (18) mounted in a bottom part of the door lower part.

11. Door according to any one of the preceding claims, **characterized in that** the first connection interface (3) comprises a first assembly element (13) collaborating with a second assembly element (14) belonging to a box section (15) of the door to attach said first connection interface (3) to said door box section (15).

12. Motor vehicle comprising a bodyshell and a door according to any one of the preceding claims, said door being hinged to said bodyshell in such a way as to vary between an open configuration and a closed configuration, **characterized in that** it comprises a first sealing loop, formed at least by the first and second seals (2a, 2b) and the first connection interface, between a box section (15) of said door and said bodyshell when the door is in the closed configuration.

13. Vehicle according to the preceding claim, **characterized in that** it comprises a third seal mounted on the bodyshell and collaborating with the door in its closed configuration so as to form a second sealing loop, notably the first sealing loop surrounds the second sealing loop.
